# EUROPEAN PATENT SPECIFICATION

(11) **EP 0 956 782 B1**
(45) Date of publication and mention of the grant of the patent: **02.07.2003**
(21) Application number: 98108884.2
(22) Date of filing: 15.05.1998
(51) Int. Cl.: A23P 1/00, A21D 13/08

(54) **A process for producing food products and product obtained therefrom**
Verfahren zur Herstellung von Nährungsmitteln und so erhaltenen Produkte
Procédé pour la production de produits alimentaires et produits ainsi obtenus

(43) Date of publication of application: 17.11.1999
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., D-6000 Frankfurt am Main (DE)
(72) Inventor: Giachino, Giuseppe, 12040 Sommariva Perno (Cuneo) (IT)
(74) Representative: Rambelli, Paolo

(56) References cited:
- EP-A- 0 445 850
- EP-A- 0 561 702
- DE-C- 464 315
- FR-A- 2 361 821

## Description

The present invention concerns a process for the fabrication of a food product on the basis of leavened dough (paste).

The relevant state of the art is extremely rich, as is readily borne out by, for example, EP-A-0 683 982 US-A-4-159 348, DE 464 315 C or EP-A-0 445 850.

DE 464 315 C and EP-A-0 445 850 describe a process for producing a food product comprising the forming of a dough and subjecting the said dough to a puffing operation with the application of fatty matter.

EP-A-0- 683 982 describes the realization of an oven-baked product starting from a dough allowed to undergo natural leavening. The relative process envisages the fabrication of a rolled sheet of dough comprising crossed layers that are obtained by means of successive operations of cross-rolling. In this way the dough is rendered capable of incorporating a high-weight content of yogurt.

US-A-4 159 348, on the other hand, describes the realization of a confectionery product comprising a slice of sweet bread soaked in sugared aqueous alcoholic liquor in proportions of at least one part by weight of liquor per part by weight of sweet bread. The relative fabrication process comprises, among others, a natural leavening phase of the bread of considerable duration.

The said leavening phase can be adopted for the realization of leavened-dough products of a different type, though always with the intention of obtaining a rather soft bread as the final product of the baking process. This traditional solution has proved highly satisfactory for various ultimate-use purposes, especially when the bread is intended - as is the case of the latter of the documents cited hereinabove - subsequently to be impregnated with, for example, a liquor.

In the absence of such an impregnation, the bread resulting from the baking may prove - at least in some possible applications - to be excessively soft/dry on consumption. This is the case, for example, of products intended to be consumed as snacks and of which the organolectic characteristics set out to reproduce the characteristics of such products as pizza.

The present invention sets itself the scope of realizing a product capable of satisfying these requirements in an excellent manner, and this even when the consumer heats the product before consuming it.

According to the present invention this scope is attained thanks to a process having the characteristics set out in Claim 1 hereinbelow. The invention concerns also the product resulting from the said process.

Very briefly, the solution according to the invention is based - in what at present is the preferred embodiment - on the working of a leavened dough enriched with alternative layers of fatty material, leavening and baking it as a continuous strip and with definitive formation (portioning) of the product only after the baking.

In what is at present the preferred form of embodiment, the relative product is configured as a salted snack product made up of leavened bread obtained by puff-pastry processing (i.e. a so-called "semi-puff") divivided into two or more layers, stuffed with a fatty cream, for example, an anhydrous cream flavoured with cheese and tomato, possibly enriched with pieces of olive or peppers or various vegetables, the whole decorated, though only as a matter of preference, with motives of peppers and rounds of green olives.

Always in what is at present the preferred embodiment, the relative production cycle envisages the preparation of a dough intended for natural leavening (with variable percentages of salt and sugar, for example, from about 0.4% to about 2.5% of salt and from about 3.8% to about 15% of sugar) with a working cycle that comprises two or more dough centres and with rest intervals to obtain a good leavening. The dough obtained in this manner (usually known as "batter") is enriched with fatty material (typically margarine) by means of a puff-pastry type working process that consists of creating a variable number (typically 100 to 500) of superpositions of layers of batter and fatty matter. The rolled dough obtained in this manner is made to leaven in accordance with a natural leavening process and - upon leaving the oven - the bread layer obtained in this manner (which typically has a thickness comprised between about 21 and 23 mm) is duly cooled. Subsequently, the bread is cut into longitudinal strips and separated into two layers. On the upper layer there is placed a decoration of peppers and olives and the whole is then subjected to rebaking in the oven. The lower layer receives a part of fatty cream as stuffing and the upper layer of bread is decorated and appropriately cooled and is then paired with the underlying remainder; this is followed by transverse cutting and, consequently, the definitive formation of the product.

The invention will now be described, though only as an example not to be considered as limitative in any manner or wise, by reference to the drawings attached hereto, where:
Figure 1 shows a first schematic overview of the phases of the process according to the invention, and
Figures 2 and 3 show the successive phases of the same fabrication process, as well as the final product obtained therefrom.

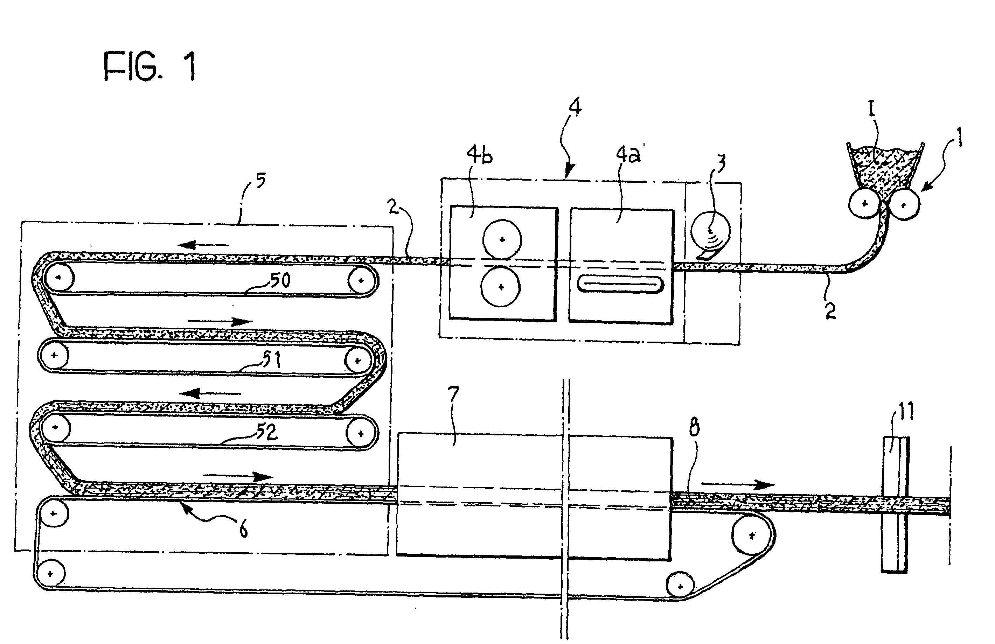

The reference number 1 in Figure 1 represents a rolling train (of a known type, for example, of the type with counterposed rollers rotating in opposite directions) intended to form a strip of dough 2 starting from a mass of bread dough I consisting of, for example, a mixture of wheat flour, possibly also added proteins (wheat glutines, either vital or devitalized, etc.), salt (preferably in such quantity that, expressed a percentage of the total weight of the dough, the salt will vary between about 0.4% and about 2.5%), sugar (preferably in proportion, again referred to the total weight of the dough, between about 3.8% and about 15%), bear yeast, possibly also other leavening agents, fats, eggs, monoglycerides and aromas, as well as kneading water.

Of course, the formulation set out above is to be considered as purely indicative and liable to being extensively varied within the framework of the invention. Depending on the characteristics that are to be conferred upon the final product, this is true both as regards the elimination of some of the indicated ingredients and as regards the addition of other ingredients, and also as regards a possible variation of the indicated percentages.

The dough strip 2 formed by the rolling train 1 will generally have a width of the order of about 100-150 cm and is enriched with fatty matter (typically mergarine), which is added at a station 3. The said station usually acts by smearing or spreading, applying to the upper surface of the dough strip 2 a continuous or discontinuous layer of fatty matter.

The choice of margarine as the fatty matter to be used is not by any means imperative, and it is perfectly possible to use fatty materials of a different type. At least for the moment, however, this choice is considered preferable, because margarine (preferably applied in an amount that can be estimated as being of the order of 18% by weight of the total mass of the dough strip 2 ) makes it possible to obtain an excellent combination of the desired organolectic qualities, the conservability of the product and the resulting calorific content.

Spreading stations like the one indicated by the reference number 3 on the drawings are well known to the state of the art, so that there is no need whatsoever to provide any detailed descriptions at this point.

The same considerations apply for the series of treatment stations indicated by the reference number 4, to which the dough strip 2 is fed after the application of the fatty matter at the station 3.

The function of the series of stations 4 is essentially that of subjecting the dough strip 2 to the series of operations of the type adopted (also on an industrial scale) for the realization of the so-called puff-pastry.

The embodiment here illustrated makes reference - by way of example - to the presence of a first station 4a, where the dough strip 2 is folded into superposed layers (for example, by folding it back onto itself in the manner of a C), and a second station 4b, where the dough strip folded in this manner is subjected to a new rolling operation. The result of this sequence of operations leads to the formation of a dough strip with a laminated structure, since it is now constituted of two layers of dough with an interposed layer of fatty matter.

The dash-dotted line that surrounds the two stations 4a and 4b is intended to indicate the fact that the series of stations 4 may in actual fact be made up of a cascade of any number (generically indicated by the letter n ) of such stations for folding the dough strip into layers and subsequently rolling the folded dough strip obtained in this manner. The dash-dotted line, which extends also to embrace the smearing or spreading station 3, indicates the fact that the aforesaid repetitive mechanism of arranging the stations in cascade may be extended also the smearing or spreading station. In other words, after having been folded back onto itself and rolled, the dough strip may receive a new application on its surface of a layer of such fatty matter as margarine, subsequently to be subjected to a new cycle of folding and rolling.

The overall result of the described operations is a composite rolled dough strip comprising a variable number of superposed layers of dough and fatty matter. This number is equal to a power of the order n - number of stations 4a-4b arranged in cascade - of the number of layers formed at each folding-rolling cycle. In what is at present the preferred embodiment, the number of superposed layers obtained is comprised between about 100 and about 500.

Equipment of the type of stations 4a and 4b is at present readily available in commerce, being produced by numerous companies that furnish equipment for the food and confectionery industry.

It should also be noted here that the operation of folding the dough strip into several layers (station 4a) can be realized not only by virtue of an operation of folding/tipping the strip 2 with respect to its transverse section plane, but also by virtue of folds (plaits) superposed in the manner of overlapped roof tiles or scales in the longitudinal direction of the strip itself.

The "rolled" dough strip (superposed layers of dough and fatty matter) that leaves the series of puff-pastry processing stations indicated by the reference number 4 is continuously fed to a leavening chamber 5. This chamber is maintained - in a known manner - in controlled conditions of temperature and humidity (for example, 30° ± 1°C and a relative humidity of 90%). As a general rule, the thickness of the rolled strip 2 - measured at the entry to the chamber 28 - amounts to some value that will typically lie between about 3 and about 8 mm.

It is, of course, perfectly possible to choose different values, not least in consideration of the characteristics of the strip 2. In general principle, the value of the minimum thickness is limited on the low side by the need for avoiding that the bread strip 2 subjected to continuous leavening may in some way lose its continuity in the course of the forward motion in the leavening chamber 5. The maximum value is limited on the high side by the fact that an excessive thickness could prejudice the uniformity of the leavening process and by the fact that the final product thickness obtained could prove excessive.

The leavening chamber 5 may be of the tunnel type. It is nevertheless preferred to adopt a chamber comprising several conveyor belts 50, 51, 52 arranged at different levels, so that the dough strip 2 subjected to continuous leavening, as it passes from one conveyor belt to the next, will be turned around, this in the sense that its upper face becomes the lower face and viceversa. In this way the leavening will take place in an extremely uniform manner over the entire thickness of the dough strip 2. In actual practice 5-7 inversions in the course of the leavening process are perfectly sufficient. Following the last inversion, the dough strip will become deposited on a conveyor belt 6 that transports the dough strip 2 across a tunnel-type baking oven indicated schematically by the reference number 7 and situated next to the leavening chamber 5.

The dwell time of the dough strip 2 in the leavening chamber 5 is regulated in such a manner that, following the leavening, the strip 2, at the moment of leaving the chamber 5 in order to be fed into the oven 7, will have a thickness of the order of about 6-16 mm.

This result can be very readily obtained with a dwell time of the order of 1-3 hours, thus giving rise to a leavening process that to all intents and purposes can be defined as natural leavening.

Given identical leavening parameters, moreover, the thickness values indicated hereinabove are at least marginally smaller than those that could be achieved by using a dough strip 2 that on commencement (i.e. before the leavening process) has the same thickness, but lacking the intermediate layers of fatty matter. This fact can be readily understood when one bears in mind the fact that the intermediate layers of fatty matter perform to a certain extent a (desired) antagonist action as far a leavening is concerned.

The same basic considerations apply also as regards the baking in the oven 7, which as a general rule is operated in accordance with conventional criteria. Typically, the oven 7 operates at a temperature chosen in the range between 220 and 240°C and the baking time is typically of the order of 10 to 18 minutes, it being understood that the longest time corresponds to the lowest temperature.

A bread carpet 8 having a thickness between 21 and 23 mm is obtained at the exit from the oven. In this case, once again, the overall thickness is at least marginally smaller than the thickness that one could reasonably expect (24-26 mm, for example) in the case of baking of a similar leavened dough without any intermediate layers of fatty material.

The bread strip or carpet 8 leaving the furnace 7 is then cooled (in a known manner - and with means that are not shown on the drawings) to the point of bringing its temperature down to more or less room temperature or some value only slightly above it.

This bread carpet has regular structure that consists of alternate layers of bread of a uniformly developed cell structure and separated by intermediate layers of bread impregnated with fatty matter and therefore characterized by a more compact cell structure made up of cells that are substantially smaller than the cells of the cellular structure of the adjacent layers not saturated with fatty matter.

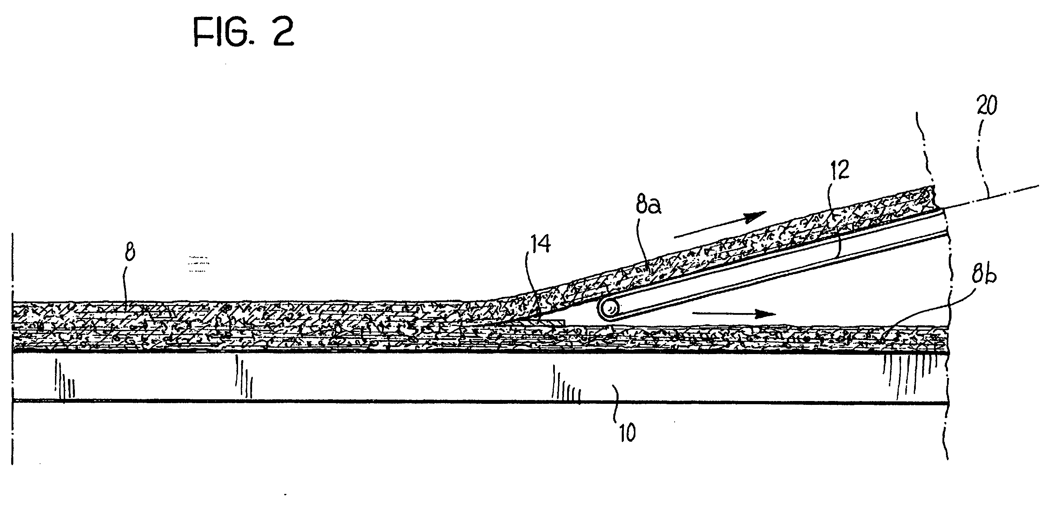

At the outlet from the oven 7 the bread carpet 8 (which will normally have a width of the order of 80-100 cm) is sent (though possibly only after passing through a first cutting station 11 to be described further on) to the cutting station shown more clearly in Figure 2.

In actual practice, this station comprises a pair of conveyor belts 10, 12 that are operated (by means of motor means not shown on the drawings) and located in such a manner that the conveyor belt 10 acts as sole input conveyor and also constitutes one of the two output conveyors of the station. The conveyor belt 12, on the other hand, constitutes a kind of branch conveyor that separates from the upper part of the conveyor 10 to constitute a second output conveyor of the station. A blade 14 positioned at the point where the conveyor 12 separates from the conveyor 10 (or, more precisely, slightly upstream of that point) splits the bread carpet 8 into two layers 8a, 8b; in the embodiment of the invention here illustrated, each of these layers has a thickness of half the thickness of the incoming bread carpet 8.

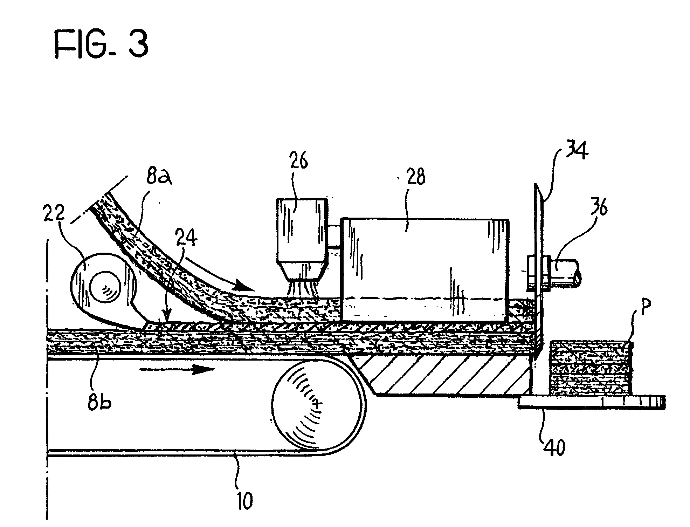

One of the bread layers obtained in this manner (in the example here illustrated: the upper layer 8a) passes onto the conveyor 12 and is thus deviated onto the route indicated by the reference number 20, proceeding in the same direction as the other layer 8b, which continues to move forward on the conveyor 10, this with a view to the subsequent renewed superposition of the two layer at the station shown in Figure 3.

The splitting of the bread strip 8 into two layers effected in accordance with the criteria illustrated in Figure 2, of course, represents no more than a simplification of one of the many different methods that could be used for performing this splitting operation.

The laminated structure of the bread carpet 8 facilitates the splitting of this strip into two or more part strips like those indicated by 8a and 8b in Figure 2: in fact, the intermediate layers saturated with fatty matter correspond to facilitated cleavage planes along which the bread strip 8 can readily be split.

Figure 3 may be interpreted as an ideal prolongation of Figure 2 that illustrates the terminal tract of the conveyor 10 with the bread layer 8b that it moves forward. It can also be seen that the other bread layer 8a comes down from the higher level, starting from the route indicated by the reference number 20 in Figure 2, moving towards the layer 8b and becoming superposed thereon.

Immediately upstream of the point of confluence there is arranged a supply station 22 that applies to the layer 8b a stuffing layer 24 intended to become sandwiched between the bread layers 8a and 8b.

If for a moment we now turn back to Figure 1, the reference number 11 represents a cutting unit with either knives or rotating disks (but in either case of a known type) possibly arranged on the output side of the oven 7 to cut the bread strip 8 into longitudinal strands that will subsequently be subjected to the operation of separation and subsequent resuperposition after the insertion of the stuffing layer as illustrated in Figures 2 and 3. This solution, which envisages the cutting of the bread strip 8 into strands on the output side of the oven 7, has been found to constitute a preferential choice on account of the dimensional stability of the product. Nevertheless, it is no more than a preferred solution and is not by any means imperative, this in the sense that the separation of the bread strip 8 into strands can also be obtained in a subsequent phase, for example, immediately prior to the final "portioning" operation of the product to be described further on.

As has already been suggested on a previous occasion, the stuffing layer 24 could be constituted - for example - by a fatty cream, a fatty cheese and tomato cream with well distributed pieces of olives and pepper being a case in point. This stuffing mass is prepared upstream of the application station 22 in accordance with criteria that are all well known.

The reference number 26 indicates yet another station, in this case a decorating station (once again of a type known as such) situated as a general rule just downstream of the point of confluence of the two layers 8a and 8b. The function of the station 26 is that of decorating the bread strip 8a with a garnishing layer consisting - for example - of thin strips of peppers and/or slices of green olives, cream or paste, etc.

Preferably, the application of the garnishing at the station 26 is followed by further baking (generally of short duration) realized - for example - in an oven that in Figure 3 is indicated as a whole by the reference number 28. This oven may be of the tunnel type, for example, possibly operated by means of an infrared system.

At this point the strip of stuffed bread, decorated and rebaked, becomes subjected to the "portioning" operation intended to give rise to the individual products or portions of product.

This operation includes a phase of cutting the bread strip into longitudinal strands (always provided that this operation has not already been carried further upstream as schematically indicated by the reference number 11 in Figure 1) and a transverse cutting operation effected - for example - with a cutter consisting of a circular blade 34 keyed onto a rotating shaft 36 driven by a motor not shown on the drawings. The blade 34 performs a rapid translation motion transverse to the bread strip, so that from every strand of the laminated and stuffed bread there is cut a tartlet that drops onto a transverse conveyor belt 40. The final product obtained in this manner, indicated by the letter P in Figure 3, is therefore constituted (in the embodiment here illustrated) of a salted snack made up of leavened bread and divided into two layers, stuffed with a fatty cheese and tomato cream with small pieces of olives and peppers, the whole decorated with thin strips of peppers and slices of green olives.

The product P is subsequently sent to a packaging station, which may advantageously be of the "flow-pack" type. Apart from ensuring good conservation in time of the product obtained in this manner, this type of packaging facilitates the performance of the operation - to be deemed preferential in the case of products of this type - that envisages the product P to be slightly heated before it is consumed, thereby exalting, precisely on account of the puff-pastry-type structure, the qualities that render the product agreeable to the palate and derive from the presence of the fatty matter.

## Claims

1. A process for producing a filled food bakery product comprising two or more layers (8a, 8b) of leavened bread and a stuffing (24) within said layers, comprising the steps of forming of a dough for bread-making (2), subjecting said dough to a puffing operation (4), causing the said dough to leaven (5), baking (7) the dough leavened in this manner, cutting the baked dough transversally (14), thereby to subdivide it into superposable layers (8a, 8b), introducing a stuffing mass (24) between said superposable layer (8a, 8b) and superposing said superposable layers (8a, 8b), **characterised in that** the said dough for bread-making (2), prior to leavening is subjected to said puffing operation (4) with the application of fatty matter (3) such as to confer upon the said dough a laminated structure with the interposition of layers of fatty matter and subjecting said laminated dough to continuous leavening (5) in the form of a strip.

2. A process according to claim 1, **characterised in that** it further comprises the step of subjecting the stuffed bread strip (8) to further baking in an oven (28), after the stuffing.

3. A process according to claim 1 or claim 2, **characterised in that** it comprises the operations of:
- forming the said bread-making dough into the form of a strip (2),
- applying the said fatty matter to at least one of the faces of the said dough strip,
- folding (4a) the said dough strip (2) with the said applied fatty matter into superposed layers, and
- subjecting the series of superposed layers obtained in this manner to a rolling operation (4b).

4. A process according to claim 3, **characterised in that** the said operation of folding into layers (4a) and the said new operation of rolling (4b) are repeated several times in cascade.

5. A process according to either claim 3 or claim 4, **characterised in that** the operation of folding into layers is performed in the transverse plane of the said dough strip.

6. A process according to either claim 3 or claim 4, **characterised in that** the said operation of folding into layers is performed by folding the said dough strip in the manner of overlapping roof-tiles or scales in the longitudinal direction of the said strip.

7. A process according to any one of the preceding claims, **characterised in that** margarine is used as the said fatty material.

8. A process according to an one of claims 1 to 7, **characterised in that** the said laminated dough is turned upside down several times during the leavening process.

9. A process according to any one of the preceding claims, **characterised in that** the said laminated dough is left to leaven and/or is baked in such a manner as to have a thickness between about 21 and about 23 mm after baking.

10. A process according to any one of the preceding claims, '**characterised in that** the said dough has a salt content comprised between about 0.4% and 2.5% of the total weight of the dough.

11. A process according to any one of claims 1 to 10, **characterised in that** the said dough has a sugar content comprised between about 3.8% ad about 15% of the total weight of the dough.

12. A process in accordance with any one of claims 1 to 11, **characterized in that**, following baking (7), it comprises the operation of cutting the said bread strip (8) by subdividing it (11) into longitudinal strands.

13. A process in accordance with any one of claims 1 to 12, **characterized in that** the said stuffing mass (24) consists of a fatty cream, preferably on the basis of cheese and tomato.

14. A process in accordance with any one of the preceding claims, **characterized in that** it comprises the operation of applying at least one layer of garnishing (26) onto one of the faces of the bread obtained by baking (7) the said laminated dough.

15. A process in accordance with Claim 14, when dependent on claim 2, **characterized in that** the said operation of further baking in an oven (28) is performed after the application of the said at least one layer of garnishing (26).

16. A process in accordance with any one of the preceding claims, **characterized in that** the bread (8) obtained by baking (7) the said laminated dough is subdivided (11, 34) into respective product portions only after the baking.

## Patentansprüche

1. Verfahren zum Herstellen eines gefüllten essbaren Gebäckprodukts mit zumindest zwei Schichten (8a, 8b) aus aufgegangenem Brot und einer Füllung (24) innerhalb dieser Schichten, mit den folgenden Schritten: Ausbilden eines Teigs zum Herstellen von Brot (2), Aufblähen (4) des Teigs, Aufgehenlassen (5) des Teigs, Backen (7) des so aufgegangenen Teigs, quer Zerschneiden (14) des gebackenen Teigs, um ihn so in übereinanderlegbare Schichten (8a, 8b) zu unterteilen, Einführen einer Füllmasse (24) zwischen die übereinanderlegbaren Schichten (8a, 8b) und Übereinanderlegen der übereinanderlegbaren Schichten (8a, 8b), **dadurch gekennzeichnet, dass** der Teig zur Brotherstellung (2) vor dem Aufgehen dem Aufblähvorgang (4) unterzogen wird, und zwar unter Anwendung von fetthaltiger Materie (3), um dem Teig so eine laminierte Struktur aufzuprägen, wobei Schichten der fetthaltigen Materie dazwischen angeordnet sind, und wobei dieser laminierte Teig in Form eines Streifens dann kontinuierlich aufgehen gelassen wird (5).

2. Verfahren nach Anspruch 1, **dadurch gekennzeichnet, dass** der gefüllte Brotstreifen (8) außerdem nach dem Füllen weiter in einem Ofen (28) gebacken wird.

3. Verfahren nach Anspruch 1 oder 2, **dadurch gekennzeichnet, dass** es die folgenden Vorgänge aufweist:
- Ausbilden des Brotteigs in Form eines Streifens (2),
- Aufbringen der fetthaltigen Materie auf zumindest eine Fläche des Teigstreifens,
- Falten (4a) des Teigstreifens (2) mit der darauf aufgebrachten fetthaltigen Materie in übereinandergelegte Schichten, und
- Auswalzen (4b) der Reihe von übereinandergelegten Schichten, die so erhalten wurde.

4. Verfahren nach Anspruch 3, **dadurch gekennzeichnet, dass** das Falten in Schichten (4a) und das Auswalzen (4b) mehrfach in Kaskade wiederholt werden.

5. Verfahren nach Anspruch 3 oder 4, **dadurch gekennzeichnet, dass** das Falten in Schichten in der querverlaufenden Ebene des Teigstreifens durchgeführt wird.

6. Verfahren nach Anspruch 3 oder 4, **dadurch gekennzeichnet, dass** das Faltens in Schichten durch Falten des Teigstreifens in der Art und Weise von überlappenden Dachschindeln oder Schuppen in Längsrichtung des Streifens durchgeführt wird.

7. Verfahren nach einem der vorangehenden Ansprüche, **dadurch gekennzeichnet, dass** Margarine als das fetthaltige Material verwendet wird.

8. Verfahren nach einem der Ansprüche 1 bis 7, **dadurch gekennzeichnet, dass** der laminierte Teig mehrfach während des Aufgehens umgekehrt wird.

9. Verfahren nach einem der vorangehenden Ansprüche, **dadurch gekennzeichnet, dass** der laminierte Teig so aufgehen gelassen und/oder gebacken wird, dass er nach dem Backen eine Dicke zwischen ungefähr 21 und ungefähr 23 mm hat.

10. Verfahren nach einem der vorangehenden Ansprüche, **dadurch gekennzeichnet, dass** der Teig einen Salzgehalt von zwischen 0,4% und 2,5% des Gesamtgewichts des Teigs hat.

11. Verfahren nach einem der Ansprüche 1 bis 10, **dadurch gekennzeichnet, dass** der Teig einen Zuckergehalt von zwischen 3,8% und 15% des Gesamtgewichts des Teigs hat.

12. Verfahren nach einem der Ansprüche 1 bis 11, **dadurch gekennzeichnet, dass** der Brotstreifen (8) anschließend an das Backen (7) durch Unterteilen (11) des Brotstreifens (8) in längsverlaufende Stränge geschnitten wird.

13. Verfahren nach einem der Ansprüche 1 bis 12, **dadurch gekennzeichnet, dass** die Füllungsmasse (24) aus einer fetthaltigen Creme besteht, vorzugsweise auf der Basis von Käse und Tomaten.

14. Verfahren nach einem der vorangehenden Ansprüche, **dadurch gekennzeichnet, dass** zumindest eine Garniturschicht (26) auf eine der Flächen des durch Backen (7) des laminierten Teigs erhaltenen Brots aufgebracht wird.

15. Verfahren nach Anspruch 14, wenn abhängig von Anspruch 2, **dadurch gekennzeichnet, dass** das weitere Backen in einem Ofen (28) nach dem Aufbringen der zumindest einen Garniturschicht (26) durchgeführt wird.

16. Verfahren nach einem der vorangehenden Ansprüche, **dadurch gekennzeichnet, dass** das durch Backen (7) des laminierten Teigs erhaltene Brot (8) erst nach dem Backen in jeweilige Produktbereiche unterteilt (11, 34) wird.

## Revendications

1. Procédé pour fabriquer un produit alimentaire de boulangerie farci, comprenant au moins deux couches (8a, 8b) de pain levé et une farce (24) à l'intérieur desdites couches, comprenant les opérations consistant à former une pâte à pain (2), soumettre ladite pâte à une opération de feuilletage (4), amener ladite pâte à lever (5), cuire au four (7) la pâte levée de cette façon, découper la pâte cuite transversalement (14) de manière à la subdiviser en couches superposables (8a, 8b), introduire une masse de farce (24) entre lesdites couches superposables (8a, 8b) et superposer lesdites couches superposables (8a, 8b), **caractérisé en ce que** ladite pâte à pain (2), avant de lever, est soumise à ladite opération de feuilletage (4) avec l'application de matière grasse (3) de manière à donner à ladite pâte une structure feuilletée en intercalant des couches de matière grasse et en soumettant ladite pâte feuilletée sous la forme d'une bande à un levage continu (5).

2. Procédé selon la revendication 1, **caractérisé en ce qu'**il comprend également l'opération consistant à soumettre la bande de pain farcie (8) à une cuisson au four (28) supplémentaire, après avoir été farcie.

3. Procédé selon la revendication 1 ou la revendication 2, **caractérisé en ce qu'**il comprend également les opérations consistant à :
- façonner ladite pâte à pain en la forme d'une bande (2),
- appliquer ladite matière grasse sur au moins l'une des faces de ladite bande de pâte,
- plier (4a) ladite bande de pâte (2) avec ladite matière grasse appliquée en des couches superposées, et
- soumettre la série de couches superposées obtenues de cette façon à une opération de laminage (4b).

4. Procédé selon la revendication 3, **caractérisé en ce que** ladite opération de pliage en des couches (4a) et ladite nouvelle opération de laminage (4b) sont répétées plusieurs fois en cascade.

5. Procédé selon la revendication 3 ou la revendication 4, **caractérisé en ce que** l'opération de pliage en des couches est réalisée dans le plan transversal de ladite bande de pâte.

6. Procédé selon la revendication 3 ou la revendication 4, **caractérisé en ce que** ladite opération de pliage en des couches est réalisée en pliant ladite bande de pâte à la manière de tuiles ou d'écaille se chevauchant dans la direction longitudinale de ladite bande.

7. Procédé selon l'une quelconque des revendications précédentes, **caractérisé en ce que** de la margarine est utilisée comme ladite matière grasse.

8. Procédé selon l'une quelconque des revendications 1 à 7, **caractérisé en ce que** ladite pâte feuilletée est retournée plusieurs fois durant son levage.

9. Procédé selon l'une quelconque des revendications précédentes, **caractérisé en ce que** ladite pâte feuilletée est mise à lever et/ou est cuite au four de manière à avoir une épaisseur d'environ 21 mm à environ 23 mm après cuisson.

10. Procédé selon l'une quelconque des revendications précédentes, **caractérisé en ce que** ladite pâte a une teneur en sel comprise entre environ 0,4 et 2,5 % du poids total de la pâte.

11. Procédé selon l'une quelconque des revendications 1 à 10, **caractérisé en ce que** ladite pâte a une teneur en sucre comprise entre environ 3,8 et 15 % du poids total de la pâte.

12. Procédé selon l'une quelconque des revendications 1 à 11, **caractérisé en ce que**, après la cuisson au four (7), il comprend l'opération consistant à découper ladite bande de pain (8) en la subdivisant (11) en pâtons longitudinaux.

13. Procédé selon l'une quelconque des revendications 1 à 12, **caractérisé en ce que** ladite masse de farce (24) consiste en une crème grasse, de préférence à base de fromage et de tomate.

14. Procédé selon l'une quelconque des revendications précédentes, **caractérisé en ce qu'**il comprend l'opération d'application d'au moins une couche de garniture (26) sur l'une des faces du pain obtenu par cuisson au four (7) de ladite pâte feuilletée.

15. Procédé selon la revendication 14, lorsque dépendante de la revendication 2, **caractérisé en ce que** ladite opération de cuisson supplémentaire au four (28) est réalisée après l'application de ladite au moins une couche de garniture (26).

16. Procédé selon l'une quelconque des revendications précédentes, **caractérisé en ce que** le pain (8) obtenu par cuisson au four (7) de ladite pâte feuilletée est subdivisé (11, 34) en portions de produit respectives uniquement après la cuisson.
